# EUROPEAN PATENT SPECIFICATION

(11) **EP 3 303 974 B1**
(45) Date of publication and mention of the grant of the patent: **24.07.2019**
(21) Application number: 16744518.8
(22) Date of filing: 27.05.2016
(51) Int. Cl.: F41A 23/20, B64D 7/06

(54) **FIREARM SUPPORT SYSTEM**
WAFFENTRÄGERSYSTEM
SYSTÈME DE SUPPORT D'ARME À FEU

(30) Priority: 28.05.2015 IT UB20151137
(43) Date of publication of application: 11.04.2018
(73) Proprietor: LEONARDO S.P.A., 00195 Roma (IT)
(72) Inventor: LEONESIO, Gian Battista, 25017 Lonato del Garda (IT); CASTELLETTI, Paoloandrea, 25126 Brescia (IT); GREGORINI, Gianmario, 19136 La Spezia (IT)
(74) Representative: Vitillo, Giuseppe
(86) International application number: PCT/IB2016/053131
(87) International publication number: WO 2016/189507

(56) References cited:
- WO-A1-2013/041956
- US-A- 2 995 986
- US-A1- 2008 047 421
- US-A1- 2010 126 338

## Description

### Technical field

The invention relates to a firearm support system designed to be installed on a vehicle, in particular an aircraft.

### Technological background

A firearm support system of the known art is disclosed in US 2010/0126338 A1.

In the defense field, it is known to install a firearm in aircrafts, so that the firearm can open fire on a target through an opening of said aircraft. For example, in helicopters, the firearm, usually a machine gun, is fitted on a support or pedestal, which is fixed to the floor of the aircraft close to the side wall or the side window, or close to the rear ramp.

Assemblies installed in a known manner suffer from some drawbacks.

One drawback lies in the presence of the pedestal fixed to the floor, which hinders or even obstructs the passage of men and equipment going into and out of the aircraft. As a matter of fact, in case the firearm is installed on the support close to the rear ramp, it becomes harder for the crew to move into and out of the aircraft and the same also applies to the passage of large equipment, such as for example military vehicles. Therefore, the firearm and the relative installing assembly are an obstacle in those areas allowing access to the inside of the military vehicle.

A further drawback lies in the fact that a support system fixed to the floor on the inside of the vehicle takes up a lot of space.

### Summary of the invention

The invention is a firearm support system according to claim 1.

An object of the invention is to provide a firearm support system, which is able to solve this and other drawbacks of the prior art and which, at the same time, can be produced in a simple and economic fashion.

In particular, one of the advantages of this invention lies in the fact that, when the firearm is not shooting against a target, the access to the inside of the vehicle is very easy. In particular, it is easier for men and equipment to move into and out of the vehicle.

A further advantage lies in the constructive simplicity and effectiveness of the support system, which minimizes the space taken up and the obstacles present on the inside of the military vehicle.

According to the present invention, this and other objects are reached by means of a firearm support system having the features set forth in the appended independent claim.

The appended claims are an integral part of the technical teachings provided in the following detailed description concerning the invention. In particular, the appended dependent claims define some preferred embodiments of the invention and describe optional technical features thereof.

### Brief description of the drawings

Further features and advantages of the invention will be best understood upon perusal of the following detailed description, which is provided by way of example and is not limiting, with reference, in particular, to the accompanying drawings, wherein:
- figures 1a and 1b are perspective views of a first variant according to the invention, in two different operating positions;
- figure 2 is a schematic side view of the variant shown in figures 1a and 1b;
- figures 3a and 3b are perspective views of a second variant according to the invention, in two different operating positions;
- figures 4a and 4b are perspective views of a detail of the invention, in two different operating positions;
- figures 5a, 5b, 5c, 5d are perspective views of a detail of the invention, in different operating positions.

### Detailed description of the invention

The vehicle on which the support system can be installed comprises a compartment to accommodate the crew, wherein the compartment has:
- a bearing surface 4,
- an upper structure 6 rising above the bearing surface 4, and
- an opening 8, through which a firearm 10 is going to shoot.

The support system comprises:
- an anchoring portion 20, for being fixed, preferably in a removable manner, to upper structure 6 and is located in the compartment,
- a mobile support 22, or mobile support structure, which is coupled to anchoring portion 20 in a mobile manner, is adapted for receiving firearm 10, and is able to allow firearm 10 to move between an operating position, in which firearm 10 is ready to shoot through opening 8, and a non-operating position, in which firearm 10 is retracted. When firearm 10 is retracted, the space taken up inside the compartment is minimized.

Firearm 10 can be, for example, a machine gun, an electric machine gun, a Gatling machine gun, a gas-operated reloading machine gun or other types of known firearms.

With reference to the preferred variants shown in the accompanying drawings, the vehicle can be an aircraft, such as for example a helicopter or a fixed-wing airplane. Alternatively, the support system can be applied to further vehicles, such as for example a ship or a ground vehicle (for example a vehicle with tracks or a vehicle on wheels). In case of an aircraft, the upper structure of the compartment can be the fuselage.

Bearing surface 4 substantially is the floor of the vehicle, on which the crew can usually walk and which, if necessary, can also be used as a loading surface. Upper structure 6 comprises the side walls and the ceiling of the compartment; upper structure 6 can be the fuselage of an aircraft. Therefore, according to the invention, the support system for the firearm substantially hangs - or is suspended - from said upper structure 6. In this way, the bearing surface substantially remains free, thus minimizing the space occupied in the compartment of the vehicle.

According to an embodiment, anchoring portion 20 can be fixed to at least one rib or spar belonging to upper structure 6 of the compartment, in particular to the fuselage of the aircraft. Furthermore, anchoring portion 20 can be associated with further structural elements belonging to upper structure 6 of the vehicle, such as beams, panels, etc.

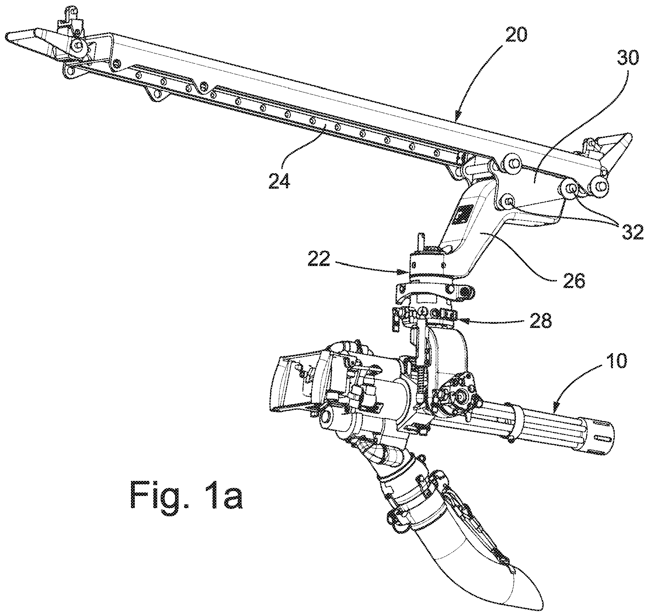

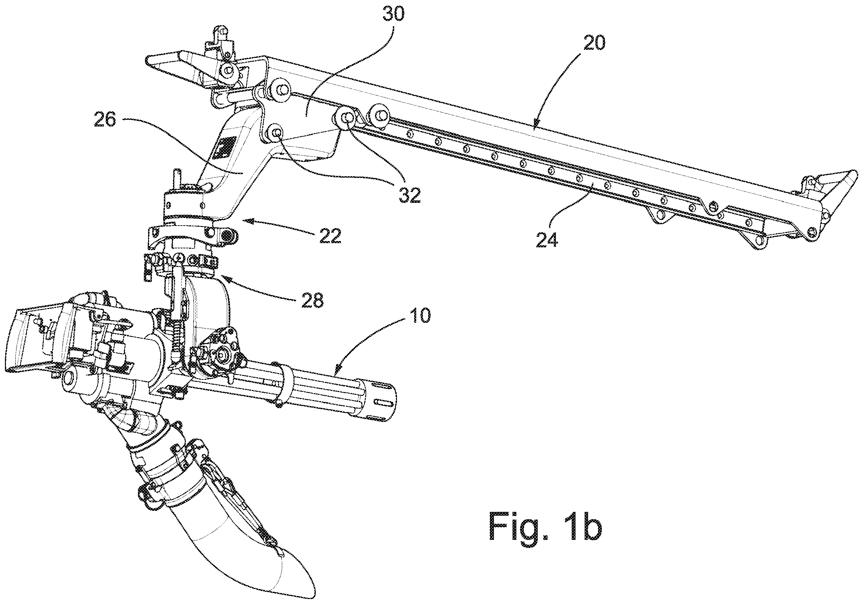

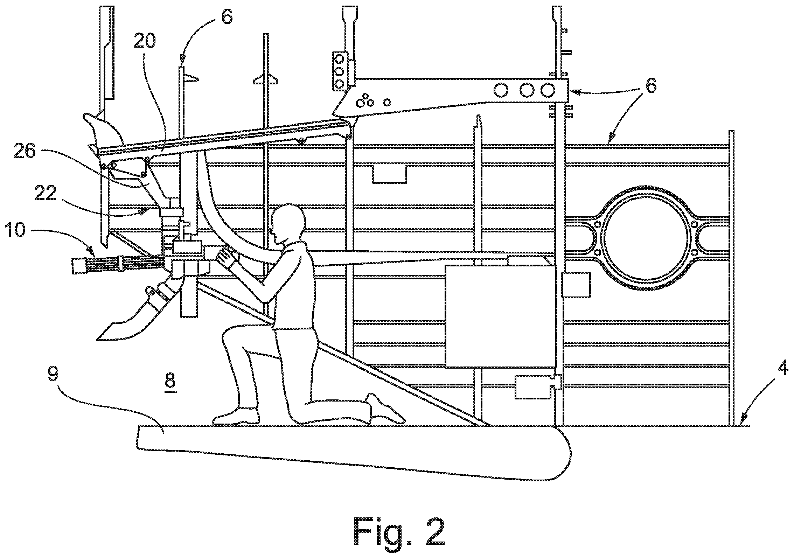

With reference to the variant shown in figures 1a, 1b, and 2, mobile support 22 can slide on anchoring portion 20, especially projecting under it. Anchoring portion 20 is an oblong element. In particular, anchoring portion 20 is designed to be fixed to a plurality of ribs or spars (indicated, by way of example, with 6). Anchoring portion 20 includes a system of guides 24, to enable the sliding movement of mobile support 22. By mere way of example, the variant of the support system shown herein can advantageously be installed in a helicopter, maybe a Boeing® CH-47 helicopter. As it is known, CH-47 is a tandem rotor helicopter having a rear loading ramp to load men and equipment, such as ground vehicles. Rear ramp 9 is used to open and close opening 8 through which firearm 10 is going to shoot. This support system can be associated with other types of vehicles or aircrafts having a rear loading ramp.

According to a particular embodiment, in the operating position, firearm 10 at least partly projects from opening 8 and, in the non-operating position, said opening can be completely closed.

Preferably, mobile support 22 comprises an arm 26, which is connected, at a first end of its, to anchoring portion 20 in a mobile manner, and is connected, at a second end of its, to a firearm support 28, which is able to allow firearm 10 to rotate relative to arm 26.

With reference to figures 1a and 1b, arm 26 can slide relative to anchoring portion 20. In particular, the support system comprises a sliding bracket 30, which can slide on the system of guides 24 and is coupled to arm 26. Arm 26 is interposed between a pair of sliding brackets 30. For example, arm 26 is coupled between the pair of sliding brackets 30 by means of pins 32, in a removable manner. It is clearly possible to also use other known fixing means to enable the coupling between arm 26 and sliding brackets 30.

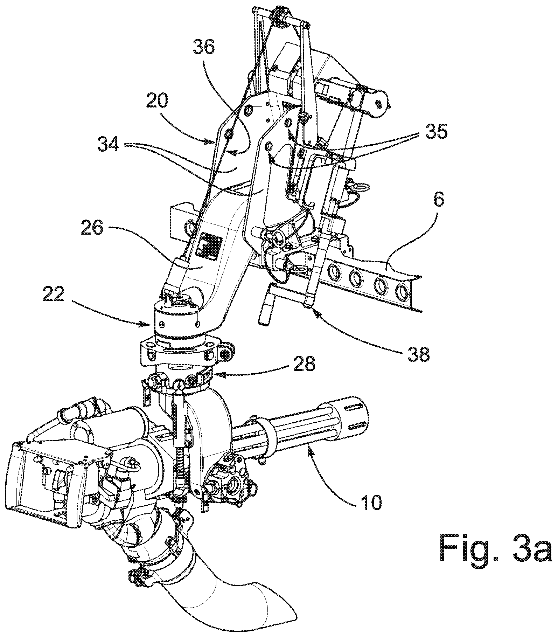

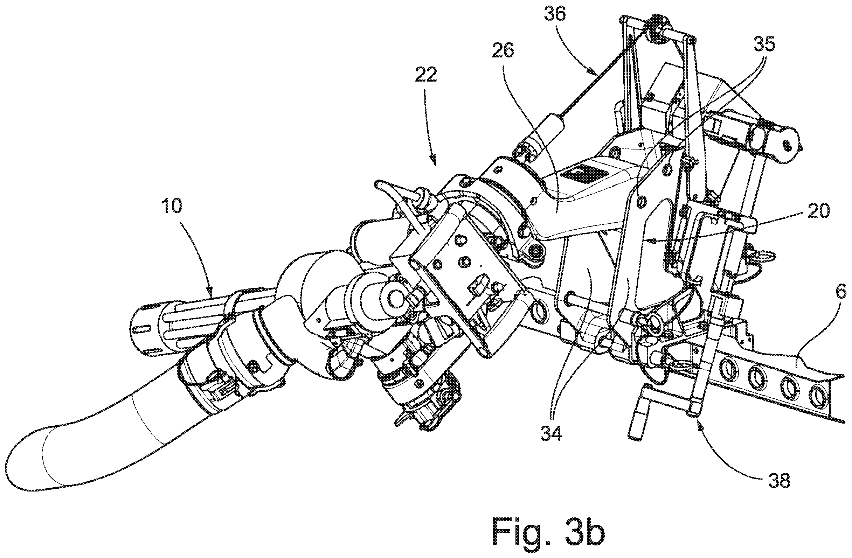

Figures 1a and 3a show the support system in the operating position; figures 1b and 3b show the support system in the non-operating position. With reference to the variant shown in figures 1a and 1b, in the non-operating position, mobile support 22 is farther away from opening 8 through which firearm 10 is going to shoot. In this position, it is possible to close opening 8, for example by closing rear ramp 9.

With reference to the variant shown in figures 3a and 3b, mobile support 22 can rotate relative to anchoring portion 20. Anchoring portion 20 is fixed to upper structure 6; for example, anchoring portion 20 is coupled, preferably in a removable manner, to at least one rib or spar. Advantageously, anchoring portion 20 includes a pair of brackets 34 coupled to upper structure 6, in particular to a rib or spar. Mobile support 22 comprises arm 26, which is connected, at a first end of its, to anchoring portion 20 in a mobile manner, and is connected, at a second end of its, to a firearm support 28, which is able to allow firearm 10 to rotate relative to arm 26. Preferably, arm 26 can rotate relative to anchoring portion 20. In particular, arm 26 is hinged to anchoring portion 20, so as to rotate around a rotation axis; advantageously, this rotation axis is substantially horizontal.

Conveniently, though not necessarily, there is provided an actuator means (or "actuator") to control the movement of mobile support 22 relative to anchoring portion 20. For example, the actuator means controls the movement of arm 26 relative to anchoring portion 20. Advantageously, the actuator means is also adapted to keep said mobile support 22, and in particular arm 26, in a predetermined position relative to anchoring portion 20.

With reference to the variant shown in figures 3a and 3b, the actuator means includes a cord or rope 36, which is connected to arm 26 so as to allow it to rotate around the rotation axis. Similarly, a chain can be used. Rope 36 is operated by an operating mechanism. In the example shown herein, the operating mechanism can be manually operated by a user. In particular, the operating mechanism includes a turning handle 38, for being held by a user and, by turning, winds and - respectively - unwinds rope 36, thus controlling the rotation of arm 26. According to a different variant, rope 26 is operated by an automatic operating mechanism.

With reference to the variant shown in figures 1a, 1b, and 2, the actuator means advantageously is a linear actuator to control the sliding movement of mobile support 22 relative to anchoring portion 20.

Generally speaking, the actuator means can be manually-operated or automatic. For example, in case of automatic operation, it is possible to use a motor means, conveniently an electric motor, which is controlled by a control unit. It is possible to provide a known interface, through which the user gives orders to the control unit so as to operate the actuator means and move mobile support 22 relative to anchoring portion 20.

Figure 3a shows the support system in the operating position; figure 3b shows the support system in the non-operating position. In the non-operating position, mobile support 22 and firearm 10 do not interfere with opening 8 through which firearm 10 is going to shoot, and opening 8 can be closed. For example, the opening can be a side opening made on the side of an aircraft, such as a helicopter.

Advantageously, with reference to the variants including arm 26, said arm 26 is made of carbon fiber or titanium. In this way, the weight of the support system can be minimized, in particular reducing the mechanical forces acting upon the bearing structure of upper structure 6, including, for example, the ribs and spars.

Optionally, a first locking system allows mobile support 22 to be locked, in a releasable manner, relative to anchoring portion 20 in a mutual position. Preferably, the locking system allows mobile support 22 to be locked, in a releasable manner, relative to anchoring portion 20 in a plurality of mutual positions. In particular, the first locking system allows arm 26 to be locked, in a releasable manner, relative to anchoring portion 20 in at least one mutual position. With reference to the first variant shown herein, the mutual position corresponds to a linear position assumed by arm 26 along the oblong element of anchoring portion 20, in the direction of the sliding line of arm 26. With reference to the second variant shown herein, the mutual position corresponds to an angular mutual position between arm 26 and anchoring portion 20, with reference to a rotation axis around which arm 26 can be moved relative to anchoring portion 20. For example, a first mutual position is associated with the operating position and a second mutual position is associated with the non-operating position.

The first locking system can be manually activated/deactivated by a user. Alternatively, the locking system can be activated/deactivated by means of a control unit; for example, the user can act upon an interface to generate a locking/release signal to activate/deactivate the mutual locking between the respective components. For example, this first locking system can be used when there are no actuator means to move mobile support 22 relative to anchoring portion 20. With particular reference to figures 3a and 3b, arm 26 can be locked in the operating condition and in the non-operating condition by means of a pin passing through holes 35 made in at least one bracket 34 and arm 26.

The support system can be advantageously installed in an existing vehicle in a quick and effective manner.

Advantageously, firearm 10 can move relative to arm 26. In particular, firearm support 28, in a known manner, allows firearm 10 to rotate in elevation and in traverse, so as to allow the user to aim at a target and start shooting.

Firearm support 28 comprises an innovative mechanism, foe defining the limit profile delimiting the possible trajectories of the projectiles coming out of firearm 10. This profile is also known as "field of aim" o "firing profile".

As we will explain more in detail below, the aforesaid mechanism operates - in an advantageous manner - by means of a principle substantially of the "cam" type.

Firearm support 28 for firearm 10 comprises:
- a body 104, which is provided with at least one profile 106 on its surface;
- a feeler pin 100, for striking against profile 106 and for being coupled to firearm 10 so as to follow the movement of said firearm 10;
- a support element 108, rotatable around a first axis z-z (traverse axis) relative to body 104, support element 108 being also for being coupled to firearm 10, thus allowing a mutual rotation between said firearm 10 and said support element 108 around a second axis x-x (elevation axis).

Conveniently, when using the system, the first axis z-z is substantially vertical, in particular when firearm 10 is in the operating position.

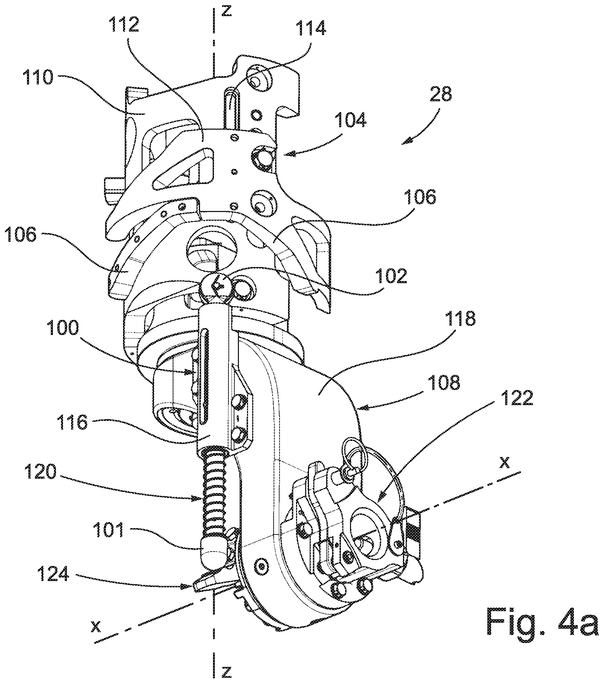

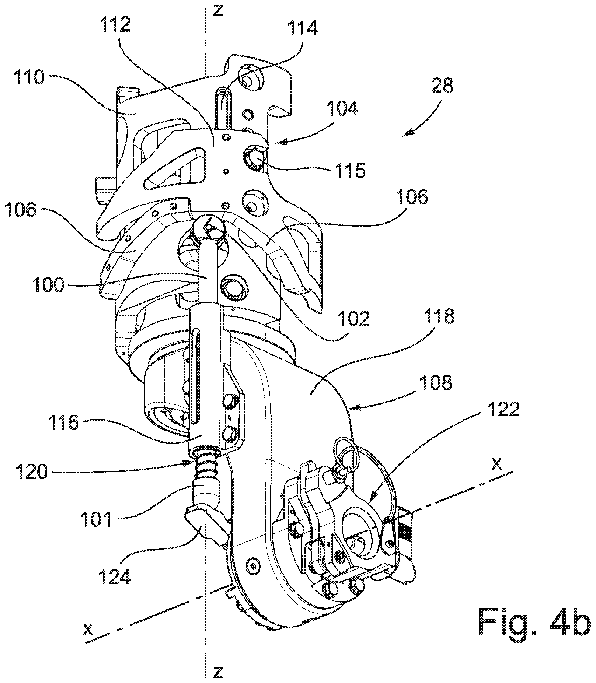

Feeler pin 100 includes a first end 101, which can be coupled to firearm 10, and a second end 102, for striking against profile 106. In figure 4a the second end 102 is spaced apart from profile 106, whereas in figure 4b the second end 102 strikes against profile 106.

In the embodiment shown, feeler pin 100 is mobile in a guided manner relative to support element 108 and is preferably shaped like a rod having, on opposite sides, the first end 101 and the second end 102.

Preferably, the second end 102 comprises a rolling element, such as a roller, for sliding along profile 106, thus guiding the movement of firearm 10.

The cooperation between profile 106 and feeler pin 100 delimits the angular width allowed to firearm 10 around the second axis x-x (elevation axis), depending on the angular position of support element 108 relative to body 104 with reference to the first axis z-z (traverse axis). By determining the shape of profile 106 it is possible to configure and select the most appropriate conformation of the field of aim within which firearm 10 can shoot. For example, it is possible to configure a field of aim that exploits as much as possible the space allowed by the space of vehicle where firearm 10 is installed, though without the risk of opening fire on parts of the vehicle. On the contrary, according to the prior art, the field of aim is substantially rectangular or square, as, in known firearm supports, the angular range in elevation/depression and the traverse angular range (or azimuthal angular range) are independent of one another.

For example, it is possible to choose a field of aim having a profile shaped according to the needs, for example even with a polygonal shape with more than four sides, and the polygon can be regular or irregular. Furthermore, the field of aim can comprise curved segments and, if necessary, curved segments as well as straight segments. Advantageously, the field of aim is consistent with opening 8 through which firearm 10 can shoot. As a matter of fact, opening 8 usually does not have a perfectly rectangular shape, but, instead, it can have a complex shape; thanks to innovative firearm support 28, it is possible to enlarge the area of the field of aim as much as possible, though operating in total safety, namely without hitting, in an undesired manner, parts of the vehicle. Therefore, profile 106 can comprise curved and/or straight portions. In the example shown in figures 4a and 4b, profile 106 has a shape similar to the one of an "upside-down U".

By mere way of example and with reference to figures 4a and 4b, when the firearm is its operating position, the first axis z-z defines the azimuthal or traverse angle and the second axis x-x defines the elevation/depression angle of the firearm.

The first axis z-z lies on a plane that is substantially perpendicular to the second axis x-x. The first axis z-z and the second axis x-x can be mutually incident or skew.

By way of example, body 104 has a shape that is substantially suited to laterally overlap a stationary upright (if necessary carried by arm 26 and not numbered in the drawings) around which support element 108 can rotate. In particular, body 104 has the shape of a longitudinally cut sleeve, which can be laterally applied to the aforesaid fixed upright (if necessary, in a removable manner, as described more in detail below).

Preferably, body 104 comprises a fixed portion 110 (for example a shaped overhang laterally projecting outwards from body 104) and a mobile portion 112 (for example a shaped overhang laterally projecting outwards from body 104), which can be moved to a plurality of mutual positions relative to fixed portion 110, so as to change the configuration of profile 106. In particular, fixed portion 110 and mobile portion 112 define profile 106 with which feeler pin 100 can cooperate, which is different depending on whether said portions 110, 112 are aligned and/or adjacent or are in distant and/or staggered positions.

By varying profile 106 you can change the field of aim. This aspect is advantageous because it allows the user to change the field of aim in a simple and quick manner, for example based on the type of vehicle and on the limit trajectories that the projectiles of firearm 10 can cover without damaging parts of the vehicle on which firearm support 28 is mounted. Sometimes it is also possible that, in the same vehicle, the field of aim needs to be changed for different reasons; for example, in some helicopters, an external fuel tank can be mounted on the aircraft: in this case, the field of aim could dangerously intercept the tank, thus putting at risk to the safety of the crew, hence the field of aim needs to be changed. Or, for example, when the blades of an helicopter rotate at a low speed or are still, the ends of these blades can bend downwards due to their own weight and, therefore, the trajectory of the projectiles coming out of firearm 10 could dangerously hit the blades; hence, the field of aim needs to be changed limiting the maximum elevation of firearm 10. In this case, the user releases mobile portion 112 from its current position relative to the fixed portion 110, moves mobile portion 112 towards a further mutual position and fixes it: by so doing profile 106 changes and, as a consequence, the field of aim changes as well.

Conveniently, mobile portion 112 can slide on fixed portion 110. For example, respective guides 114 are provided on mobile portion 112 or on fixed portion 110. Furthermore, there are conveniently provided known fixing means (for example screws 115, snapping means, quick-release means, bayonet systems, etc.) to fix, in a removable manner, mobile portion 112 to fixed portion 110 in a mutual position among the plurality of mutual positions that these portions 110, 112 can assume. Preferably, mobile portion 112 can be fixed between two end position of guide 114, corresponding to a maximum field of aim and to a minimum field of aim, respectively.

With reference to the variant shown herein, feeler pin 100 is constrained to support element 108 in a sliding manner. In particular, feeler pin 100 is adapted for sliding substantially parallel to the first axis z-z. Conveniently, a primary guide 116 is coupled to support element 108 and enables the sliding movement of feeler pin 100. Optionally, an elastic means, such as a spring 120, is interposed between feeler pin 100 and primary guide 116 so as to push feeler pin 100 towards a relative position with respect to primary guide 116 and, therefore, with respect to support element 108.

Preferably, support element 108 comprises a lateral bracket 118, or a lateral single-arm, for being coupled to a side of firearm 10. Alternatively, support element 108 comprises a pair of arms, between which firearm 10 can be mounted.

Support element 108 (in particular the distal portion of lateral bracket 118) comprises a coupling system 122, for being coupled to firearm 10 in a releasable manner. Coupling system 122 comprises a mobile striker 124, which is configured to follow, in a constrained manner, the rotation of firearm 10 around the second axis x-x and to control the movement of feeler pin 100. In particular, mobile striker 124 is a rotary lever, which strikes against the first end 101 of feeler pin 100. Optionally, coupling system 122 is coupled to firearm 10 by means of a known pin system.

In the preferred embodiment shown herein, body 104 has a curved shape (with reference to the first axis z-z), in particular body 104 has a semi-cylindrical shape. Preferably, profile 106 is a protuberance on the outer surface of body 104.

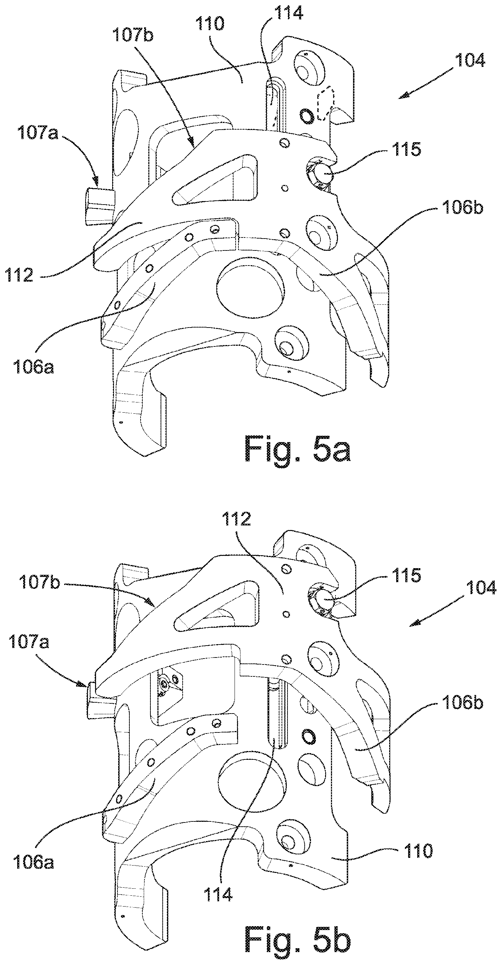

Figures 5a and 5b show body 104, in which the mobile portion 112 assumes two different positions relative to fixed portion 110. In the convenient variant shown herein, fixed portion 110 comprises a first profile 106a and mobile portion 112 comprises a second profile 106b; said first profile 106a and second profile 106b forming the profile against which feeler pin 100 is going to strike. In figure 5a, the first profile 106a and the second profile 106b are aligned with one another and form a continuous profile, namely substantially without corners or gaps; on the other hand, in figure 5b, the first profile 106a and the second profile 106b are not aligned and, therefore, form a profile with corners.

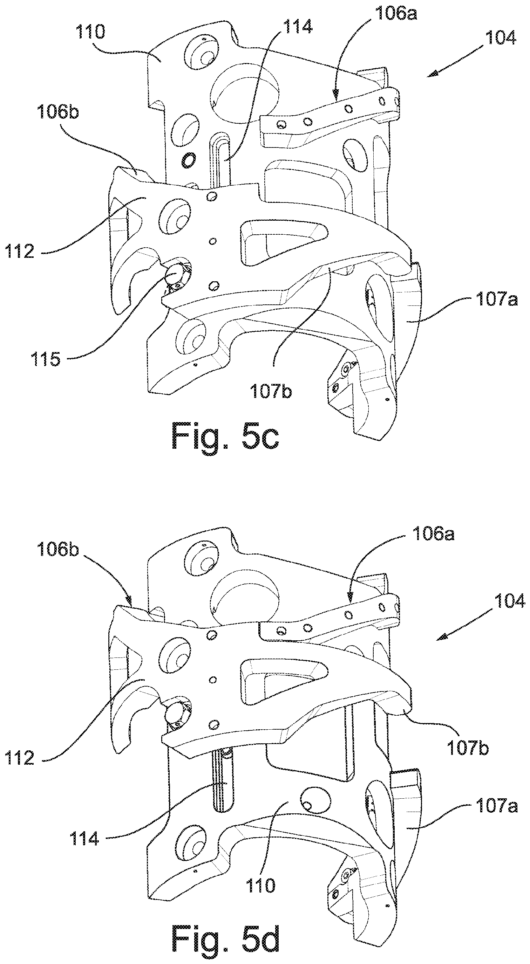

Body 104 is advantageously configured to be removed from support element 108 and be reassembled so as to be turned upside-down by 180° relative to said support element 108 (for example on a stationary upright - not numbered - on which said support element 108 is fitted is a mobile manner), so as to obtain a different field of aim with one single body 104. Figures 5a and 5b show body 104 configured to be fixed on support element 108 with a first orientation, whereas figures 5c and 5b show body 104 oriented upside-down relative to figures 5a and 5b. Figures 5c and 5d show body 104, in which mobile portion 112 assumes two different positions relative to fixed portion 110. In the convenient variant shown herein, fixed portion 110 comprises a further first profile 107a and mobile portion 112 comprises a further second profile 107b; said further first profile 107a and further second profile 107b forming the profile against which feeler pin 100 is going to strike. In figure 5c, the further first profile 107a and the further second profile 107b are aligned with one another and form a continuous profile, namely substantially without corners or gaps; on the other hand, in figure 5d, the further first profile 107a and the further second profile 10b are not aligned and, therefore, form a profile with corners. The first profiles 106a and 107a are profiles that externally protrude on fixed portion 110. Second profiles 106b and 107b are both comprised on mobile portion 112.

Advantageously, firearm support 28 comprises primary locking means to selectively lock the rotation of support element 108 relative to body 104 in any mutual angular position. Advantageously, coupling system 122 comprises secondary locking means to selectively lock the rotation of firearm 10 relative to support element 108 in any mutual angular position. For example, the primary and/or secondary locking means can be mechanical and can be activated by a user by means of known intervention means, such as a lever, a push-button, a turning handle, etc.

Preferably, firearm support 28 can be provided with adjustment means to limit the rotation of firearm 10 relative to support element 108, around the second axis x-x, to a preferred angular range. It is also possible to provide firearm support 28 with adjustment means to limit the rotation of support element 108 relative to the body, around the first axis z-z, to a preferred angular range.

Advantageously, support element 108 and/or body 104 can be made of carbon fiber or titanium.

Firearm support 28 is conveniently associated with an arm 26 and with a support system, as described and discussed above.

## Claims

1. Firearm support system, for being installed on a vehicle, in particular an aircraft; the vehicle comprising a compartment to accommodate the crew, wherein the compartment has:
- a bearing surface (4),
- an upper structure (6) rising above the bearing surface (4), and
- an opening (8), through which a firearm (10) is going to shoot;
the support system comprises:
- an anchoring portion (20), for being fixed to the upper structure (6) and located in the compartment,
- a mobile support (22), which is coupled to the anchoring portion (20) in a mobile manner, on which the firearm (10) is being assembled, and is able to allow the firearm (10) to move between an operating position, in which the firearm (10) is ready to shoot through the opening (8), and a non-operating position, in which the firearm (10) is retracted;
wherein the mobile support (22) comprises an arm (26), which is connected, at a first of its ends, to the anchoring portion (20) in a mobile manner, and is connected, at a second of its ends, to a firearm support (28), which is able to allow the firearm (10) to rotate relative to the arm (26);
wherein the firearm support (28) comprises:
- a body (104), which is provided with at least one profile (106) on its surface;
- a feeler pin (100), for striking against profile (106) and for being coupled to the firearm (10) so as to follow the movement of said firearm (10);
- a support element (108), rotatable around a traverse axis (z-z) relative to body (104), the support element (108) being also for being coupled to the firearm (10), thus allowing a mutual rotation between said firearm (10) and said support element (108) around an elevation axis (x-x).

2. System according to claim 1, wherein the anchoring portion (20) can be fixed to at least one rib or longerons belonging to the upper structure (6) of the compartment.

3. System according to claim 1 or 2, wherein the mobile support (22) can slide on the anchoring portion (20).

4. System according to claims 2 and 3, wherein the anchoring portion (20) is an oblong element, for being fixed to a plurality of ribs or longerons belonging to the upper structure (6).

5. System according to claim 1, wherein the mobile support (22) can rotate relative to the anchoring portion (20) .

6. System according to any of the previous claims, wherein the arm (26) is made of carbon fibre or titanium.

7. System according to any of the previous claims and comprising an actuator means to control the movement of the mobile support (22) relative to the anchoring portion (20).

8. System according to claim 7, wherein the actuator means controls the movement of the arm (26) relative to the anchoring portion (20).

9. System according to claim 3, wherein the arm (26) can slide relative to the anchoring portion (20).

10. System according to claim 5, wherein the arm (26) can rotate relative to the anchoring portion (20).

11. System according to claim 10, comprising an actuator means to control the movement of the arm (26) relative to the anchoring portion (20), wherein the actuator means includes a cord or rope (36) or chain, which is connected to the arm (26) so as to allow it to rotate around a rotation axis.

12. System according to claim 11, wherein the rope (36) is operated by an operating mechanism configured to be manually operated by a user.

13. System according to claim 12, wherein the operating mechanism includes a turning handle (38), for being held by a user, which, by turning, winds and respectively unwinds the rope (36), thus controlling the rotation of the arm (26) .

14. Vehicle comprising a compartment to accommodate the crew, wherein the compartment has:
- a bearing surface (4),
- an upper structure (6) rising above the bearing surface (4), and
- an opening (8), through which a firearm (10) is going to shoot; and
- a firearm support system according to any of the previous claims, wherein the anchoring portion (20) is fixed to the upper structure (6) and located in the compartment.

15. Vehicle according to claim 14, wherein, in the operating position, the firearm (10) at least partly projects from the opening (8) and, in the non-operating position, said opening can be completely closed.

## Patentansprüche

1. Feuerwaffenträgersystem zum Einbau in ein Fahrzeug, insbesondere ein Flugzeug;
wobei das Fahrzeug ein Abteil zur Unterbringung der Besatzung umfasst, wobei das Abteil aufweist:
- eine Auflagefläche (4),
- eine obere Struktur (6), die sich über die Auflagefläche (4) erhebt, und
- eine Öffnung (8), durch die eine Feuerwaffe (10) schießen wird;
wobei das Trägersystem umfasst:
- einen Verankerungsabschnitt (20) um an der oberen Struktur (6) fixiert und in dem Abteil angeordnet zu sein,
- einen beweglichen Träger (22), der beweglich mit dem Verankerungsabschnitt (20) gekoppelt ist, auf dem die Feuerwaffe (10) montiert wird, und der Feuerwaffe (10) ermöglicht, sich zwischen einer Betriebsposition, in der die Feuerwaffe (10) durch die Öffnung (8) schießen kann, und einer Nichtbetriebsposition zu bewegen, in der die Feuerwaffe (10) eingezogen ist;
wobei der bewegliche Träger (22) einen Arm (26) aufweist, der an einem ersten Ende mit dem Verankerungsabschnitt (20) beweglich verbunden ist und an einem zweiten Ende mit einem Feuerwaffenträger (28) verbunden ist, der ermöglicht, dass sich die Feuerwaffe (10) relativ zum Arm (26) dreht,
wobei der Feuerwaffenträger (28) umfasst:
- einen Körper (104), der auf seiner Oberfläche mit mindestens einem Profil (106) versehen ist;
- einen Taststift (100) zum Anstoßen gegen das Profil (106) und zum Ankoppeln an die Feuerwaffe (10), um der Bewegung der Feuerwaffe (10) zu folgen;
- ein Trägerelement (108), das um eine Querachse (z - z) relativ zum Körper (104) drehbar ist, wobei das Trägerelement (108) auch mit der Feuerwaffe (10) koppelbar ist, wodurch eine gegenseitige Drehung zwischen der Feuerwaffe (10) und dem Trägerelement (108) um eine Elevationsachse (x-x) ermöglicht wird.

2. System nach Anspruch 1, wobei der Verankerungsabschnitt (20) an mindestens einer Rippe oder Längsträgern befestigt werden kann, die zu der oberen Struktur (6) des Abteils gehören.

3. System nach Anspruch 1 oder 2, wobei der bewegliche Träger (22) auf dem Verankerungsabschnitt (20) gleiten kann.

4. System nach Ansprüchen 2 und 3, wobei der Verankerungsabschnitt (20) ein längliches Element ist, das an einer Vielzahl von Rippen oder Längsträgern befestigbar ist, die zu der oberen Struktur (6) gehören.

5. System nach Anspruch 1, wobei sich der bewegliche Träger (22) relativ zu dem Verankerungsabschnitt (20) drehen kann.

6. System nach einem der vorhergehenden Ansprüche, wobei der Arm (26) aus Kohlefaser oder Titan hergestellt ist.

7. System nach einem der vorhergehenden Ansprüche und umfassend ein Betätigungsmittel zum Steuern der Bewegung des beweglichen Trägers (22) relativ zum Verankerungsabschnitt (20).

8. System nach Anspruch. 7, wobei das Betätigungsmittel die Bewegung des Arms (26) relativ zum Verankerungsabschnitt (20) steuert.

9. System nach Anspruch 3, wobei der Arm (26) relativ zum Verankerungsabschnitt (20) gleiten kann.

10. System nach Anspruch 5, wobei der Arm (26) relativ zum Verankerungsabschnitt (20) rotieren kann.

11. System nach Anspruch 10, umfassend ein Betätigungsmittel zum Steuern der Bewegung des Arms (26) relativ zum Verankerungsabschnitt (20), wobei das Betätigungsmittel eine Schnur oder ein Seil (36) oder eine Kette aufweist, die mit dem Arm (26) verbunden ist, sodass sich dieser um eine Drehachse drehen kann.

12. System nach Anspruch 11, wobei das Seil (36) durch einen Betätigungsmechanismus betätigt wird, der konfiguriert ist, von einem Benutzer manuell betätigt zu werden.

13. System nach Anspruch 12, wobei der Betätigungsmechanismus einen Drehgriff (38) aufweist, der von einem Benutzer gehalten werden kann, der das Seil (36) durch Drehen aufwickelt bzw. abwickelt, wodurch die Drehung des Arms (26) gesteuert wird.

14. Fahrzeug mit einem Abteil zur Unterbringung der Besatzung, wobei das Abteil aufweist:
- eine Auflagefläche (4),
- eine obere Struktur (6), die sich über die Auflagefläche (4) erhebt, und
- eine Öffnung (8), durch die eine Feuerwaffe (10) schießen wird; und
- ein Feuerwaffenträgersystem nach einem der vorhergehenden Ansprüche, wobei der Verankerungsabschnitt (20) an der oberen Struktur (6) befestigt ist und in dem Abteil angeordnet ist.

15. Fahrzeug nach Anspruch 14, wobei die Feuerwaffe (10) in der Betriebsposition zumindest teilweise von der Öffnung (8) vorsteht und in der Nichtbetriebsposition die Öffnung vollständig geschlossen werden kann.

## Revendications

1. Système de support d'arme à feu destinée à être installé dans un véhicule, en particulier un avion ; le véhicule comprenant un compartiment permettant de loger l'équipage, dans lequel ledit compartiment a :
- une surface d'appui (4),
- une structure supérieure (6) s'élevant au-dessus de la surface d'appui (4), et
- une ouverture (8), à travers laquelle une arme à feu (10) va tirer ;
le système de support comprend :
- une partie d'ancrage (20), destinée à être fixée à la structure supérieure (6) et située dans le compartiment,
- un support mobile (22), qui est couplé à la partie d'ancrage (20) de manière mobile, sur lequel l'arme à feu (10) est assemblée, et qui est apte à permettre à l'arme à feu (10) de se déplacer entre une position de fonctionnement, dans laquelle l'arme à feu (10) est prête à tirer à travers l'ouverture (8), et une position de non fonctionnement, dans laquelle l'arme à feu (10) est rétractée ;
dans lequel le support mobile (22) comprend une arme (26) qui est reliée, au niveau d'une première de ses extrémités, à la partie d'ancrage (20), d'une manière mobile, et qui est reliée, au niveau d'une seconde de ses extrémités, à un support d'arme à feu (28), qui est capable de permettre à l'arme à feu (10) de tourner par rapport à l'arme (26) ;
dans lequel le support d'arme à feu (28) comprend :
- un corps (104), qui est muni d'au moins une découpe (106) sur sa surface ;
- un palpeur (100), destiné à frapper contre une découpe (106) et à être couplé à l'arme à feu (10) de façon à suivre le déplacement de ladite arme à feu (10) ;
- un élément de support (108) qui peut tourner autour d'un axe transversal (z-z) par rapport au corps (104), ledit élément de support (108) étant également destiné à être couplé à l'arme à feu (10) en permettant ainsi une rotation mutuelle entre ladite arme à feu (10) et ledit élément de support (108) autour d'un axe d'élévation (x-x).

2. Système selon la revendication 1, dans lequel la partie d'ancrage (20) peut être fixée sur au moins une nervure ou des longerons appartenant à la structure supérieure (6) du compartiment.

3. Système selon la revendication 1 ou 2, dans lequel le support mobile (22) peut coulisser sur la partie d'ancrage (20).

4. Système selon les revendications 2 et 3, dans lequel la partie d'ancrage (20) est un élément oblong, destiné à être fixé sur une pluralité de nervures ou de longerons appartenant à la structure supérieure (6).

5. Système selon la revendication 1, dans lequel le support mobile (22) peut tourner par rapport à la partie d'ancrage (20).

6. Système selon l'une quelconque des revendications précédentes, dans lequel l'arme (26) est composée de fibres de carbone ou de titane.

7. Système selon l'une quelconque des revendications précédentes et comprenant des moyens d'actionnement pour commander le déplacement du support mobile (22) par rapport à la partie d'ancrage (20).

8. Système selon la revendication 7, dans lequel les moyens d'actionnement commandent le déplacement de l'arme (26) par rapport à la partie d'ancrage (20).

9. Système selon la revendication 3, dans lequel l'arme (26) peut coulisser par rapport à la partie d'ancrage (20).

10. Système selon la revendication 5, dans lequel l'arme (26) peut tourner par rapport à la partie d'ancrage (20) .

11. Système selon la revendication 10, comprenant un moyen d'actionnement pour commander le déplacement de l'arme (26) par rapport à la partie d'ancrage (20), dans lequel le moyen d'actionnement inclut une ficelle ou une corde (36) ou une chaine, qui est reliée à l'arme (26) de façon à lui permettre de tourner autour d'un axe de rotation.

12. Système selon la revendication 11, dans lequel la corde (36) est actionnée par un mécanisme d'actionnement agencé pour être actionné manuellement par un opérateur.

13. Système selon la revendication 12, dans lequel le mécanisme d'actionnement inclut une poignée rotative (38), destinée à être tenue par un utilisateur, qui, en faisant tourner celle-ci, enroule et respectivement déroule la corde (36), en commandant ainsi la rotation de l'arme (26).

14. Véhicule comprenant un compartiment pour loger l'équipage, dans lequel le compartiment a :
- une surface d'appui (4),
- une structure supérieure (6) qui s'élève au-dessus de la surface supérieure (4), et
- une ouverture (8) à travers laquelle une arme à feu (10) va tirer ; et
- un système de support d'arme à feu selon l'une quelconque des revendications précédentes, dans lequel la partie d'ancrage (20) est fixée à la structure supérieure (6) et située dans le compartiment.

15. Véhicule selon la revendication 14, dans lequel, dans la position de fonctionnement, l'arme à feu (10) fait saillie au moins en partie, à partir de l'ouverture (8) et, dans la position de non-fonctionnement, ladite ouverture peut être complètement fermée.
